(19) Europäisches Patentamt

European Patent Office

Office européen des brevets

(11) **EP 0 820 894 A2**

(12) **EUROPEAN PATENT APPLICATION**

(43) Date of publication:
28.01.1998 Bulletin 1998/05

(51) Int. Cl.$^6$: **B60L 11/12**, B60K 6/04

(21) Application number: 97112510.9

(22) Date of filing: 22.07.1997

(84) Designated Contracting States:
AT BE CH DE DK ES FI FR GB GR IE IT LI LU MC
NL PT SE

(30) Priority: 23.07.1996 JP 193074/96

(71) Applicant: HITACHI, LTD.
Chiyoda-ku, Tokyo 101 (JP)

(72) Inventors:
• Masaki, Ryoso
Hitachi-shi, Ibaraki 319-14 (JP)

• Tajima, Fumio
Taga-gun, Ibaraki 319-13 (JP)
• Morinaga, Shigeki
Hitachi-shi, Ibaraki 316 (JP)
• Miyazaki, Taizou
Hitachi-shi, Ibaraki 316 (JP)

(74) Representative:
Beetz & Partner
Patentanwälte
Steinsdorfstrasse 10
80538 München (DE)

(54) **Non-step transmission and vehicle using it**

(57) A non-step transmission is provided with a rotor (17) of which input shaft is connected to a drive source (1), another rotor (19) of which output shaft (19a) is connected to a driving load, a plurality of exciting windings for controlling the inter-coupling-force of said rotors (17, 19), and a control unit (4) for recognizing the condition of operation of a vehicle (2), and determining a gear ratio of the transmission (3). The gear ratio is controlled to be set to the determined value by controlling the exciting winding.

## FIG.1

EP 0 820 894 A2

## Description

BACKGROUND OF THE INVENTION

The present invention relates to a transmission which can smoothly transmit power, particularly to a non-step transmission suitable to convert engine speed to vehicle speed, and further to a vehicle using the transmission.

A method of changing mechanically gear ratio in non-step by using a metallic belt is generally well-known as a non-step transmission. Further, a method of changing the rotational speed of an input shaft to that of an output shaft in non-step is disclosed, for example, in Japanese Patent Application Laid-Open No. 50-54754 (1975), USP 3,789,281 (Japanese Patent Publication No. 53-168 (1978)), and Japanese Patent Application Laid-Open No. 53-13050. Because this type of electrical non-step transmission has few mechanical wear portion as compared with mechanical type of transmission, it is possible to construct a transmission system with high reliability.

The following matter is described in the above-mentioned first reference. As the load torque of the output shaft increases, the rotational speed of the output shaft decreases from high speed to low speed. Such a characteristic can be obtained by the combination of the winding of each rotor and the winding of a stator. While transmission apparatus should freely control the gear ratio according to the intention of a driver, there is a problem in that the gear ratio is determined by the magnitude of load.

According to the second reference, a current flowing to an electromagnetic coupling and a rotary machine can be controlled to a certain extent by using a power converter. Also in this case, there is a problem in that the gear ratio is determined only by the conditions of an engine and load.

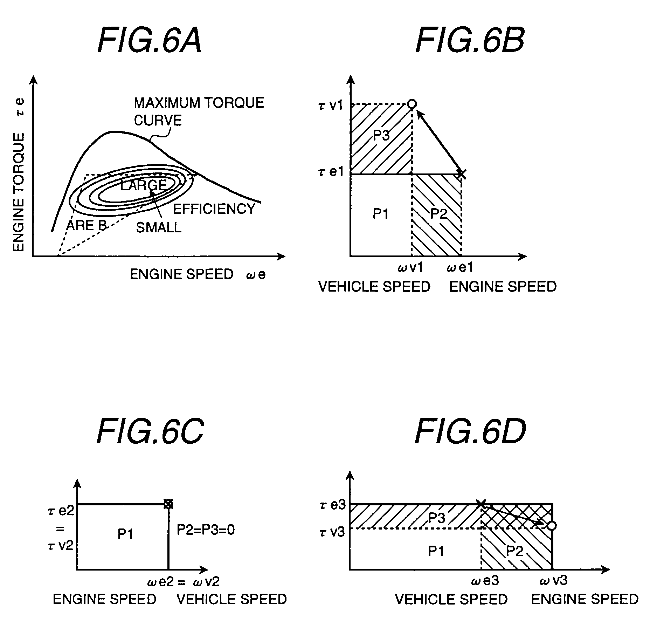

Further, particularly in Fig.6 of the third reference, it is possible to control independently currents flowing to motors by using two frequency converters. However, there is nothing hut the torque between the rotors 1 and 2 is controlled. While the apparatus disclosed in this reference can control the speed ratio, it is impossible to control arbitrarily the torque in an input-side and that in an output-side. It is, therefore, very difficult to use the apparatus instead of a transmission for a vehicle.

Further, because only one directional current is controlled in these references, it is not always to control drive an engine in the optimum operation area for the engine.

SUMMARY OF THE INVENTION

Accordingly, an object of the present invention is to provide a non-step transmission with high efficiency, which can control arbitrarily the torque difference and the speed difference in the input/output shafts, decrease the mechanical friction, and improve the car's ride quality.

Another object of the present invention is to provide a system which can drive a motor and its system with high efficiency in any areas of torque and speed, by controlling the gear ratio of the non-step transmission.

A further object of the present invention is to provide a hybrid car system which can improve the fuel consumption for a vehicle and run longer distance at nominal fuel.

According to one aspect of the present invention, a non-step transmission comprises:

a first rotor at an input side,
a second rotor at an output side,
a torque transmitting means for transmitting rotational torque between the above two rotors, and
a control unit for controlling the difference between the rotational speeds of the rotors,
wherein a rotary shaft of said rotors is controlled by providing an output obtained due to the difference between the rotational speeds to a motor which rotates according to said first and second rotors.

According to another aspect of the present invention, a non-step transmission comprises:

a first rotor,
a second rotor,
a first winding for generating torque which acts on each other between said first and second rotors,
a second winding for generating torque which acts on each other between a stator and said first and second rotors,
a control unit for determining a gear ratio according to an operation command value supplied from the outside, and
a power converter for controlling each torque by suppling independently a current to said first and second windings so as to take the gear ratio.

According to a further aspect of the present invention, a non-step transmission comprises:

a rotor of which input shaft is connected to a drive source,
another rotor of which output shaft is connected to a driving load,
a plurality of exciting windings for controlling the inter-coupling-force of said rotors, and
a control unit for recognizing the condition of operation of a vehicle, and determining a gear ratio of a transmission,
wherein the gear ratio is controlled to be set to the determined value by controlling said exciting winding.

According to a further aspect of the present invention, a vehicle has an engine, and a transmission for converting the rotational speed of the engine into the rotational speed of a drive shaft for driving a car body.

The vehicle further comprises:

a first rotor which is rotated by said engine,
a second rotor for rotating said drive shaft,
a motor including a first winding for generating torque which acts on each other between said first and second rotors, and a second winding for generating torque which acts on each other between a stator and said first and second rotors,
a control unit for determining a gear ratio according to an operation command value supplied from a driver, and
first and second power converters for controlling each torque by suppling independently a current to said first and second windings so as to take the gear ratio.

According to a further aspect of the present invention, a hybrid vehicle has an engine, an electric power storing unit, and an energy converting unit for storing the rotation energy of the engine in said storing unit and converting the stored energy into the torque of a drive shaft for driving a car body.

The vehicle further comprises:

a first rotor which is rotated by said engine,
a second rotor for rotating said drive shaft,
a motor including a first winding for generating torque which acts on each other between said first and second rotors, and a second winding for generating torque which acts on each other between a stator and said first and second rotors,
a control unit for determining a gear ratio according to an operation command value supplied from a driver, and
a power converter for controlling each torque by supplying independently a current to said first and second windings so as to take the gear ratio.

BRIEF DESCRIPTION OF THE DRAWINGS

Fig.1 is a configuration view showing an embodiment of the present invention, in which the driving force of an engine is changed by a non-step transmission and the car body is driven.

Fig.2 is a speed-torque characteristic view showing a speed-change method and drive areas of a vehicle.

Fig. 3 is a flow chart showing the calculation of gear ratio carried out in a gear ratio calculating part of a control unit.

Fig.4 is a block diagram showing the calculation carried out in the main inverter control part 23 for controlling the torque of the main motor 12 by using the engine rotational speed command value $\omega$ e∗.

Fig.5 is a block diagram showing an electric power control, a torque control and a current control method in a main inverter control part.

Fig. 6 shows the relationship between the drive efficiency of the engine and the area B used to control.

Fig.7 is a configuration view showing another embodiment of the present invention, in which an engine control unit and a speed-increase gear are used.

Fig.8 is a speed-torque characteristic view showing a speed-change method and drive areas of a vehicle.

Fig.9 shows an embodiment using the non-step transmission in which the main motor and the sub-motor are integrated. Fig.9 shows also the configuration from the engine 1 to a plurality of winding motor.

Fig.10 shows speed-torque characteristic appeared when the maximum torque generated by the sub-motor part is larger than that by the main motor part.

Fig.11 shows another embodiment in which the capacitor shown in Fig.7 is replaced by a battery 49.

Fig. 12 is a speed-torque characteristic view showing a speed-change method and drive areas of a vehicle.

PREFERRED EMBODIMENT OF THE INVENTION

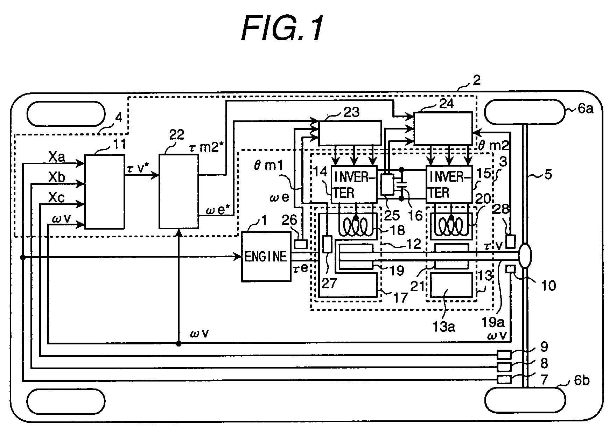

An embodiment of the present invention will be explained hereinafter with reference to Fig.1. Fig.1 shows the concept of an electric car provided with a non-step transmission. An engine 1 propels a car body 2 by rotationally driving force. The car speed-changes the rotational speed of the engine which is determined by an control amount xa of an accelerator 7 by using a non-step transmission, and obtains the driving force $\tau$ e.

The driving torque $\tau$ e is transmitted through an axle 5 to tires 6a, 6b as vehicle torque $\tau$ v (a value converted in the output shaft). As a result, the car body 2 runs. A control unit 4 for controlling the non-step transmission 3 is mounted on the car body 2.

When a driver operates the accelerator 7, brake 8, and a change-over switch 9 for instructing "forward", "backward" and "stop", the control amount xa of the accelerator 7, an control amount xb of the brake 8 and a change-over signal xc of the change-over switch 9 are input to a vehicle torque command calculating part 11 of the control unit 4. In addition, a vehicle speed $\omega$ v (a value converted in an output shaft the non-step transmission 3) obtained by a speed sensor 10 is input to the vehicle torque command calculating part 11. A target vehicle torque command value $\tau$ v∗ to be output by the car in accordance with the control amount xa of the accelerator, the control amount xb of the brake and the change-over signal xc is calculated in the vehicle torque command calculating part 11 by using the vehicle speed $\omega$ v as a parameter. Where, the relationship among xa, xb and the vehicle torque command value $\tau$ v∗ is set so as to have the characteristic suitable to an operation command.

An embodiment of the non-step transmission 3 will be explained next. Main components of the non-step transmission 3 are a main motor 12 having double rotor structure, a sub-motor 13 for adjusting the torque of the output shaft, a main inverter 14 for supplying a current through a slip ring (not shown) to three-phase winding 18 of the main motor 12, a sub-inverter 15 for supplying a current to three-phase winding 20 of the sub-motor 13, and a capacitor 16 connected to a terminal of a DC-side of the inverter 14, 15. In this embodiment, a permanent magnet type synchronous motors with high operation efficiency are used as the main motor 12 and the sub-motor 13. The main motor 12 is provided with a rotary shaft 19a, a first rotor 17 which rotates along with the rotary shaft 19a of the engine 1, and a second rotor 19 for transmitting rotational driving force through the axle 5 to tires 6a, 6b. Rotational torque $\tau$ of the first and the second rotors 17, 19 are generated according to the relationship between a current flowing to a three-phase winding 18 wound around the first rotor 17 and a magnet (not shown) provided on the second rotor 19. This torque $\tau$ is controlled so as to balance with the engine torque $\tau$ e in the manner described later. In other words, the engine torque $\tau$ e is generated by the first and second rotor 17, 19.

If the relationship between the rotational speed $\omega$ e of the engine and the running speed $\omega$ v of the vehicle satisfies $\omega$ e > $\omega$ v at this time, then energy of the main inverter 14 is converted from a three-phase AC current to a DC current. The DC current is converted again to a three-phase AC current by using the energy in the sub-inverter 15. It is, therefore, possible to flow the current to the three-phase winding 20 wound around the stator 13a of the sub-motor 13. Due to this current, torque $\tau$ m2 is generated in a rotor 21 of the sub-motor. The torque $\tau$ m2 is controlled by controlling the sub-motor so as to be

$$\tau \, m2 = \tau \, v - \tau \, e \qquad (1)$$

Thereby it becomes possible to convert the engine rotational speed $\omega$ e and the engine torque $\tau$ e in the input shaft (i.e. rotary shaft of the engine) of the non-step transmission 3 to the vehicle running speed $\omega$ v and the vehicle driving torque $\tau$ v in the output shaft, respectively. If the loss of the motor and the inverter are negligible, the power P of the engine is

$$P = \tau \, e \, \omega \, e = \tau \, v \, \omega \, v \qquad (2)$$

Therefore, the apparatus according to the embodiment shown in Fig.1 has the function similar to that of a mechanical type of non-step transmission.

The control unit 4 for implementing the above-mentioned function will be explained next. The control unit 4 is provided with a gear ratio calculating part 22, a main inverter control part 23 and a sub-inverter control part 24, in addition to the vehicle torque command calculating part 11.

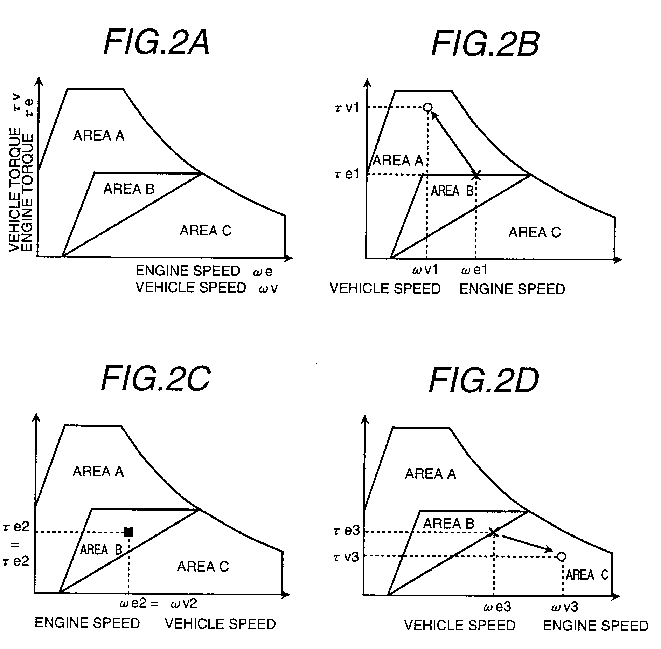

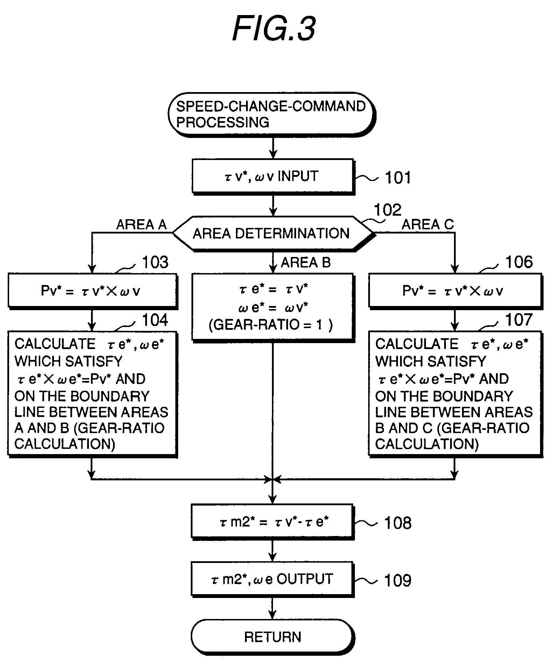

A speed-change method based on the calculation of the gear ratio carried out in the gear ratio calculating part 22 is shown in Figs.2A to 2D. Further, a concretely calculating method is shown in Fig.3 as a flow chart. The running speed and vehicle torque characteristic shown in Figs.2A to 2D is illustrated as drive areas of the vehicle, in which the torque that the main motor and the sub-motor can generate equals to each other under the condition of the vehicle which is normally required.

The calculation in the speed-change method is carried out by dividing the drive area into areas A, B and C. Further, the speed-change control is performed so that the output torque of the engine always fall into the area B, regardless of the condition of operation of the vehicle. This is because the area B is the optimum area for the efficiency of an engine. Because, in such a case, the maximum speed of the second rotor 19 sometimes become larger than that of the first rotor, the second rotor 19 should be installed inside the first rotor 17 as shown in Fig.1.

The speed-change method is performed as follows. For example, if the operating area the operation point for a vehicle is on a circle point as shown in Fig.2B, then the speed-change method is performed so that the operation point for an engine may be set to position at a cross point on the boundary line between the areas A and B, and the relationship $\tau$ e1 $\cdot$ $\omega$ e1 = $\tau$ v1 $\cdot$ $\omega$ v1 may be satisfied. If the operating area of the vehicle is within the area B as shown in Fig. 2C, equal speed and equal torque control is performed at $\omega$ e2 = $\omega$ v2 and $\tau$ e2 = $\tau$ v2 . At this time, the electric power consumed between the inverters 14 and 15 almost become equal to zero, and the power of the engine directly transfer from the first rotor 17 of the main motor 12 to the second rotor 19. Therefore, the transfer efficiency becomes the maximum value. Further, the vehicle is driven in the area C as shown in Fig.2D, the operation point of the engine is controlled so that it may be on the boundary line between the areas B and C and $\tau$ e3 $\cdot$ $\omega$ e3 = $\tau$ v3 $\cdot$ $\omega$ v3 may be satisfied.

The command value of such control is obtained by performing the processing method shown in Fig. 3 in the gear ratio calculating part 22.

In Fig. 3, the vehicle torque command value $\tau$ v* and the vehicle speed $\omega$ v are input in step 101, and using those values, it is determined to which areas of A, B or C the area corresponds in step 102. If the area is A, then a vehicle output command value Pv* is obtained in step 103, after then the engine torque command value $\tau$ e* and the engine rotational speed command value $\omega$ e* are calculated in step 104, which are on the boundary line between the areas A and B and satisfies Pv* = $\tau$ e* $\cdot$ $\omega$ e* . These value are uniquely determined. This calculation is called gear-ratio-calculation. If the area B is given as a result of the determination in step 102, then $\tau$ e* = $\tau$ v* and $\omega$ e* = $\omega$ v* are set in step 105. Namely, the gear ratio is set to "1". If the area C is given as a result of the determination in step 102, then the vehicle output command value Pv∗ is obtained in step 106, after then the engine torque command value $\tau$ e∗ and the engine rotational speed command value $\omega$ e∗ are calculated in step 107, which are on the boundary line between the areas B and C and satisfies Pv∗ = $\tau$ e∗ • $\omega$ e∗. Next, in step 108, sub-motor torque command value $\tau$ m2∗ is obtained from the difference between the vehicle torque command value $\tau$ v∗ and the engine torque command value $\tau$ e∗. In step 109, the sub-motor torque command value $\tau$ m2∗ and the engine rotational speed command value $\omega$ e∗ are output. Thereby, the gear ratio required by the vehicle can be appropriately set.

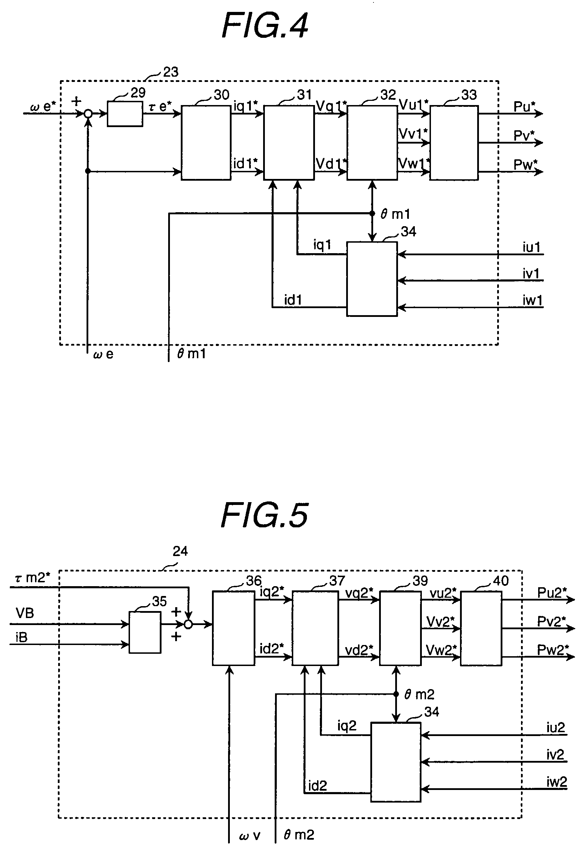

Fig.4 is a block diagram showing the calculation carried out in the main inverter control part 23 for controlling the torque of the main motor 12 by using the engine rotational speed command value $\omega$ e∗. The calculation is carried out by inputting the rotational speed $\omega$ e of the engine detected by a speed sensor 26, and a relative angle $\theta$ m1 between the first rotor 17 and the second rotor 19 into the main inverter control part 23. In an engine torque command part 29, the feedback calculation is performed by using the deviation between the engine rotational speed command value $\omega$ e∗ and the engine rotational speed $\omega$ e. As a result, the engine torque command value $\tau$ e∗ is obtained. A d-axis current command value id1∗ and a q-axis current command value iq1∗ orthogonal to the d-axis current command value are calculated in a current command part 30 so as to minimize the loss of the main motor 12 at its operation point. This method is a general method called a vector control method, in which the torque command value $\tau$ e∗ can be generated from the main motor 12 if a current is controlled according to the current command value. A current control part 31 is provided to perform the current-control-operation in a d-q coordinate system of a rotatory coordinate system. It controls to feedback the d-axis current id1 and the q-axis current iq1 to the d-axis current command value id1∗ and the q-axis current command value iq1∗, thus obtaining a d-axis voltage command value vd1 ∗ and a q-axis voltage command value vq1∗. While, a coordinate converting part 34 converts phase currents iu, iv and iw of the main inverter 14 into the d-axis current id1 and the q-axis current iq1 of the d-q coordinate system by using the relative angle $\theta$ m1.

The coordinate converting part 32 converts the d-axis voltage command value vd1∗ and the q-axis voltage command value vq1∗ into three-phase voltage commands vu1∗, vv1∗ and vw1 ∗ by using the relative angle $\theta$ m1. In a PWM generating part 33, the voltage command value is converted into PWM signals Pu1, Pv1 and Pw1, and is output to the main inverter 14. Because the output current of the inverter can be controlled correctly according to the command value, the torque command value $\tau$ e ∗ calculated by the main inverter control part 23 is generated in the first rotor 17 and the second rotor 19 of the main motor 12. Further, the speed of the first rotor 17 of the motor 12 or the engine rotational speed $\omega$ e may match with the engine rotational speed command value $\omega$ e∗.

The sub-inverter control part 24 shown in Fig.5 will be explained next. The operation of a current command part 36, a current control part 37, coordinate converting parts 38,39 and a PWM generating part 40 are the same as that of the current command part 30, the current control part 31, coordinate converting parts 34, 32 and the PWM generating part 33, respectively, except using the vehicle speed $\omega$ v and the sub-motor angle $\theta$ m2 detected by the angle sensor 28.

The sub-inverter control part 24 is different from the main inverter control part 23 in a method of calculating a torque command input to the current command part 36. Because , originally, the torque having a value which is nearly equal to a torque command value $\tau$ m2∗ is generated from the sub-motor 13 just by inputting the motor torque command value $\tau$ m2∗ to the current command part 36, it is not necessary to carry out other calculation. However, in this embodiment, a voltage VB of the capacitor 16 and a current iB passing through the capacitor detected by a capacitor-condition detector 25 is input to the sub-inverter control part 24. The product VBiB is an electric power of the capacitor. The electric power control part 35 performs the feedback control of the electric power PB so as to allow the electric power PB to be zero. By inputting the sum of the calculated result and the sub-motor torque command value $\tau$ m2∗ to the current command part 36, it becomes possible to allow the torque generated in the sub-motor 13 to be around the torque command value $\tau$ m2∗, maintaining the electric power of the capacitor 16 at zero. Therefore, even if the capacitance of the capacitor is small, it is possible to obtain the function of a non-step transmission.

the power flow and the efficiency of an engine will be explained with reference to Figs.6A to 6D. Fig.6A shows the relationship between the drive efficiency of the engine and the area B used to control. The drive efficiency of the engine is best for a middle speed and a middle torque. It is, therefore, desirable to drive the engine at that area, in order to improve the fuel consumption. The area B is the area where the efficiency of the engine takes the optimum value. According to the present invention, it becomes possible to control the engine by the non-step transmission.

Further, in case that the operation areas of a vehicle are, respectively, the areas A, B and C, how the energy flows will be explained hereinafter. In this case, it is possible to study by dividing the power of the engine into P1, P2 and P3. The power P1 is directly transferred from the first rotor of the main motor 12 to the second rotor, and exists in the region surrounded by the torque 0 - $\tau$ e1 and the speed 0 - $\omega$ v1 of Fig.6B (the region surrounded by a solid line). The power P1 may be expressed by the following equation.

$$P1 = \tau e \qquad (3)$$

The power P2 is the energy which flows from the winding 18 of the main motor 12 to the main inverter 14, and exists in the region surrounded by the torque 0 - $\tau$ e1 and the speed $\omega$ v1 - $\omega$ e1 of Fig.6B (a second region). The power P2 may be expressed by the following equation.

$$P2 = \tau e (\omega e - \omega v) \qquad (4)$$

The power P3 is the energy which flows from the sub-inverter 15 to the three-phase windings 20 of the sub-motor 13, and exists in the region surrounded by the torque $\tau$ e1 - $\tau$ v1 and the speed 0 - $\omega$ v1 of Fig.6B (a third region). The power P3 may be expressed by the following equation.

$$P3 = (\tau v - \tau e) \omega \qquad (5)$$

In Fig. 6B, namely, in the area A, the power P1 is the energy which directly drive the axle 5 from the engine 1 via the main motor 12. Because the electrical conversion by an inverter, etc. is not necessary, P1 has an electric power with very low loss. The power P2 flows the main inverter 14, and is converted to power P3, which generates torque that assists the torque of the main motor 12 from the sub-motor 13. As a result, the power P1 + P3 is output to the vehicle as a drive force. Because the energy flowing through the inverter is decreased to one half, and thus the loss of energy also is decreased. Therefore, the efficiency of the non-step transmission itself is improved.

If the operation area of the vehicle exists in the area C, the power P1 exists in the region surrounded by the torque 0 - $\tau$ e3 and the speed 0 - $\omega$ v3 of Fig.6D (the region surrounded by a solid line), thus the power P1 is big. After then, the power P3 inversely flows from the sub-motor 13 to the sub-inverter 15. Namely, P3 < 0. The power P3 becomes the power P2, which drives the axle 5 through the main motor 12. Namely, because it circulates P3 and P2 after generating P1 more than the necessary power, the efficiency due to the speed-change control in the area C is slightly lower than that in another area. However, because the efficiency of the engine can be improved, the efficiency of the whole system is increased, and thus the loss is decreased over the whole area.

Now, in the configuration of Fig.1, the main inverter 14 and the sub-inverter 15 drive the main motor and the sub-motor, respectively. Further, a positive and a negative terminals of the DC side of the main inverter 14 are connected to the positive and the negative terminals of the sub-inverter 15, respectively. Therefore, in this embodiment, the electric power is interchangeable. According to this embodiment, the range of control of the gear ratio can be extended.

Further, in this embodiment, it is not necessary to provide special equipment in order to control an engine. Therefore, it is possible to improve the fuel consumption of a vehicle.

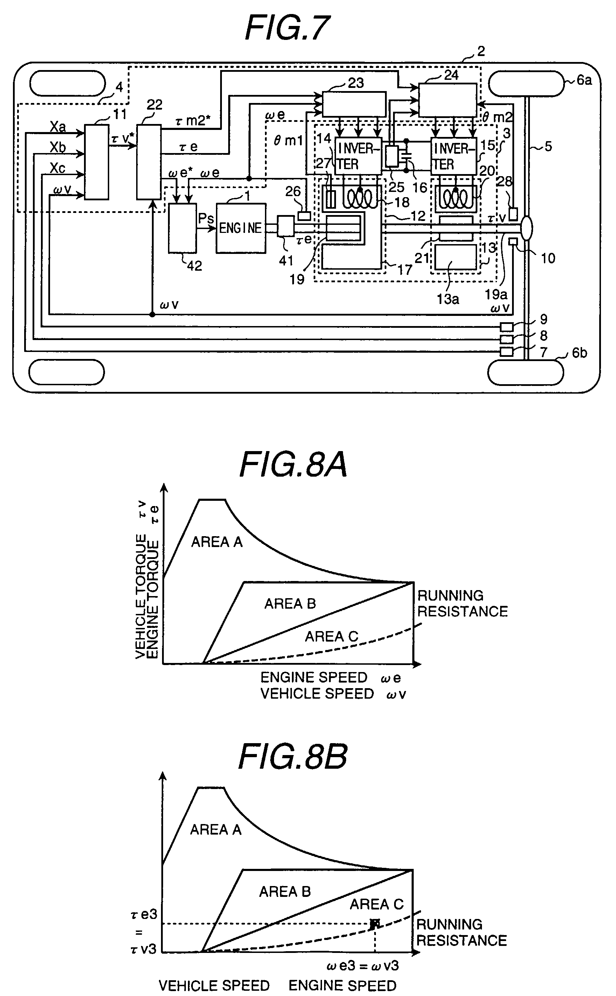

Fig.7 shows an embodiment of the apparatus for driving a vehicle, controlling the engine. The following two points are different in configuration from the embodiment of Fig.1. First, a speed-increase gear 41 is provided between the engine 1 and the non-step transmission 3. Second, the engine 1 is driven not due to the control amount of the accelerator, but by an engine control unit 42.

By adding the engine control unit 42, it is possible to control the rotational speed $\omega$ e of the engine 1, not by the main inverter control part 23, but by an engine control unit 42. Therefore, in this embodiment, the engine rotational speed command value $\omega$ e* and the engine rotational speed $\omega$ e are input to the engine control unit 42. In the unit 42, the speed feedback control is performed based on the deviation. The engine is controlled by using the resultant engine control signal Ps. Thereby the engine rotational speed $\omega$ e of the engine 1 is always controlled to match the engine rotational speed command value $\omega$ e*, independently of the load condition.

Further, the main inverter control part 23 input the engine torque command $\tau$ e*, and use the result calculated by the current command part 30 instead of the output of the engine torque command part 29 of Fig.4. Because the engine can be operate around at the engine rotational speed command value $\omega$ e* and at the operation point of the engine torque command $\tau$ e*, regardless of the secular changes of the engine and the variation of the parameter, it becomes possible to operate correctly based on the designed values.

Next, the effect of the speed-increase gear 41 will be explained. In the above-mentioned embodiment, if the operating area is in the area C, the effect of the improvement of the efficiency of the system was decreased. Therefore, in this embodiment, the speed-increase gear 41 is provided on the output shaft of the engine 1, in which the gear ratio of the gear 41 is 2:1. The torque of the output shaft side of the speed-increase gear 41 is decreased to one half of that of the output shaft of the engine 1, but the speed is increased twice. The area where the efficiency of the engine is best or the area B is shifted to the area of low torque and high speed.

Fig.8A is an example showing a drive area in the embodiment of Fig.7. because the area B shifts to a direction of the area C, the area C is decreased and the area A is increased. As a result, the energy passing through the inverters 14 and 15 can be decreased as a whole, and thereby further improving the fuel consumption of the vehicle.

Further, Fig.8B shows the speed-change method performed when the operating area is the area C, which is different from that of Fig.2D. The energy is transferred without passing through an inverter as in the case of the area B. The loss of the non-step transmission is extremely decreased. While the efficiency of the engine is deteriorated, the deterioration of the efficiency can be prevented by providing the speed-change gear. Especially, the deterioration of the efficiency in that area is further lessen when considering the running resistance of the vehicle. Therefore, the efficiency of the system can be improved as a whole.

Because the operating point of the rotational speed $\omega$ e (the value at the output side of the speed-increase gear) is relatively raised, the first rotor 17 of the main motor 12 is arranged inside from the second rotor 19. Thereby, because the circumferential speed of the rotor can be reduced, it is possible to improve the reliability.

As described above, it is assured that the transmission operates correctly at the optimum operation point, and it is possible to decrease the loss occurred when driven. It is, therefore, possible to improve the fuel consumption of a vehicle.

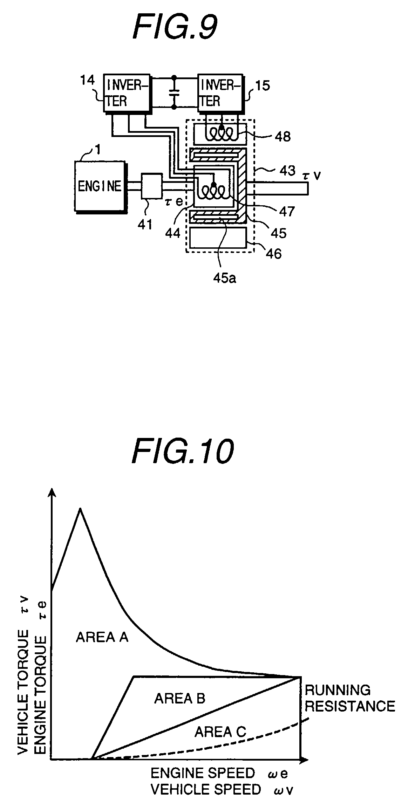

Fig. 9 shows an embodiment using the non-step transmission in which the main motor and the sub-motor are integrated. Fig.9 shows also the configuration from the engine 1 to a plurality of winding motor. A first three-phase winding 47 is wound around the first rotor 44 connected to the output shaft of the engine 1, and a permanent magnet 45a is provided on the second rotor 45 connected to the axle 5.

Further, a second three-phase winding 48 is wounded around the stator 46. these components configures the sub-motor part along with the permanent magnet 45a of the second rotor 45. By using such configuration, it is possible to improve the installation to a vehicle and the assembly.

Further, Fig.10 shows speed-torque characteristic appeared when the maximum torque generated by the sub-motor part is larger than that by the main motor part. Because it is possible to increase remarkably the torque generated in a low-speed area, it is possible to provide a vehicle system with improved start-acceleration characteristic.

According to this embodiment, it becomes possible to improve the acceleration and the assembly, in addition to the improvement of fuel consumption.

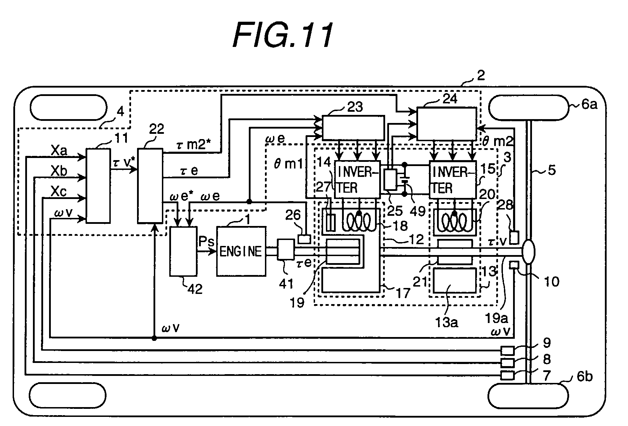

Fig.11 shows another embodiment in which the capacitor shown in Fig.7 is replaced by a battery 49. The system of Fig.11 has an improved performance also as a hybrid car. Namely, it becomes possible to perform the following drive method, by using the battery 49 which can store a large amount of electric power, instead of the capacitor 16 which can store only a small amount of electric power.

When the energy of the battery is sufficient, the engine 1 is stopped, and the load is driven only by the non-step transmission, using the battery. When the vehicle is driven at a constant speed, the sub-motor 13 is driven by the sub-inverter 15. When it needs large torque during acceleration or running on a hill, the main motor is also driven by the main inverter 14. At this time, the output shaft of the engine 1 is fixed. Thereby, it is possible to minimize the loss of the inverter and the motor when the load is relatively light. Because two motors are driven by the battery when it is necessary to generate the maximum torque, it is possible to realize a small and a highly efficient drive system for a vehicle.

If it needs relatively high torque, it is also possible to drive two motor by using the energy of the battery 49, while driving the engine 1. Therefore, it is possible to construct a compact vehicle with the improved acceleration.

If the vehicle is driven by the engine 1, it is possible to charge the battery 49, while driving appropriately the vehicle by the function of speed-change of the non-step transmission 3.

According to this embodiment, it is possible to obtain not only advantages due to the non-step transmission system, but advantages of a hybrid car, for example, miniaturization and high efficiency. A large capacity of capacitor may use instead of the battery 49.

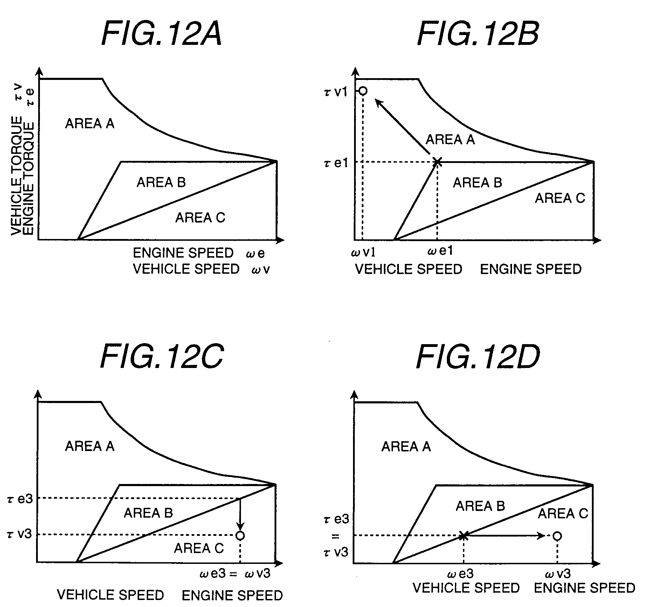

When the battery 49 of Fig.11 is small capacity and the shortage of temporary electric power is compensated by the battery 49, The speed-torque characteristic is shown in Fig. 12A. While Fig.8A shows the drive area taken when the versatility of electric power is not considered, in Fig. 12A, the area where the vehicle is driven at low speed and with high torque is enlarged. This is because a certain high electric power must be charged from the inverter to battery 49 when a large torque is generated by the engine. In other word, this is so configured that the vehicle can be driven even at low speed and with high torque by storing temporarily energy in the battery 49. At this time, the operation point of the non-step transmission 3 is shown in Fig.12B. In Fig.12B, P2 > P3, therefore, the energy is stored in the battery 49.

When the vehicle is driven at the area C, it is possible always to operate the engine 1 at the area B by a method shown in one of Figs.12C and Fig.12D. Figs.12C and 12D show the condition of charge to a battery and that of discharge (drive assistance due to the sub-motor 13) from the battery. It is possible to select a method with high efficiency according to the condition of the battery. Because in this case it is possible to interchange the electric power even when the capacity of the battery is lowered, it is possible to improve the efficiency and enlarge the drive area by such a simple and light system.

While a permanent type synchronous motor is used in the above-mentioned embodiment, an induction motor, a DC motor, etc. can be used. Further, the present invention can apply to a system for driving a vehicle under the optimum condition of operation in combination with a mechanical type of automatic transmission.

Furthermore, it is possible to combine a plurality of method described above.

## Claims

1. A non-step transmission (3) comprising:

   a first rotor (17) at an input side,
   a second rotor (19) at an output side,
   a torque transmitting means for transmitting rotational torque between the above two rotors, and
   a control unit (4) for controlling the difference between the rotational speeds of the rotors (17, 19),
   wherein a rotary shaft (19a) of said rotors (17, 19) is controlled by providing an output obtained due to the difference between the rotational speeds to a motor (12) which rotates according to said first and second rotors (17, 19).

2. A non-step transmission comprising:

   a first rotor (17),
   a second rotor (19),
   a first winding for generating torque which acts on each other between said first and second rotors (17, 19),
   a second winding for generating torque which acts on each other between a stator and said first and second rotors (17, 19),
   a control unit (4) for determining a gear ratio according to an operation command value supplied from the outside, and
   a power converter for controlling each torque by suppling independently a current to said first and second windings so as to take the gear ratio.

3. A non-step transmission comprising:

   a rotor (17) of which input shaft is connected to a drive source (1), another rotor (19) of which output shaft (19a) is connected to a driving load (5),
   a plurality of exciting windings for controlling the inter-coupling-force of said rotors (17, 19), and
   a control unit (4) for recognizing the condition of operation of a vehicle, and determining a gear ratio of a transmission,
   wherein the gear ratio is controlled to be set to the determined value by controlling said exciting winding.

4. A vehicle having an engine (1), and a transmission for converting the rotational speed of the engine (1) into the rotational speed of a drive shaft (5) for driving a car body, said vehicle further comprising:

   a first rotor (17) which is rotated by said engine (1),
   a second rotor (19) for rotating said drive shaft,
   a motor (12) including a first winding for generating torque which acts on each other between said first and second rotors (17, 19), and a second winding for generating torque which acts on each other between a stator and said first and second rotors (17, 19),
   a control unit (4) for determining a gear ratio according to an operation command value supplied from a driver, and
   first and second power converters for controlling each torque by suppling independently a current to said first and second windings so as to take the gear ratio.

5. A hybrid vehicle having an engine (1), an electric power storing unit (4a), and an energy converting unit for storing the rotation energy of the engine (1) in said storing unit (4a) and converting the stored energy into the torque of a drive shaft (19a) for driving a car body, said vehicle further comprising:

   a first rotor (17) which is rotated by said engine (1),
   a second rotor (19) for rotating said drive shaft (19a),
   a motor (1) including a first winding for generating torque which acts on each other between said first and second rotors (17, 19), and a second winding for generating torque which acts on each other between a stator and said first and second rotors,
   a control unit (4) for determining a gear ratio according to an operation command value supplied from a driver, and
   a power converter for controlling each torque by suppling independently a current to said first and second windings so as to take the gear ratio.

# FIG.1

# FIG.2A

VEHICLE TORQUE $\tau v$
ENGINE TORQUE $\tau e$

AREA A

AREA B

AREA C

ENGINE SPEED $\omega e$
VEHICLE SPEED $\omega v$

# FIG.2B

$\tau v1$

$\tau e1$

AREA A

AREA B

AREA C

$\omega v1$   $\omega e1$
VEHICLE SPEED   ENGINE SPEED

# FIG.2C

AREA A

$\tau e2$
$=$
$\tau e2$

AREA B

AREA C

$\omega e2 = \omega v2$
ENGINE SPEED   VEHICLE SPEED

# FIG.2D

AREA A

$\tau e3$

AREA B

$\tau v3$

AREA C

$\omega e3$   $\omega v3$
VEHICLE SPEED   ENGINE SPEED

# FIG.3

```
        ┌─────────────────────────────┐
        │  SPEED-CHANGE-COMMAND       │
        │  PROCESSING                 │
        └─────────────────────────────┘
                       │
                       ▼
        ┌─────────────────────────────┐
        │   $\tau v^*, \omega v$ INPUT │ ～ 101
        └─────────────────────────────┘
                       │
                       ▼
                                    102
  AREA A ◇───────────────────────────◇ AREA C
        │      AREA DETERMINATION      │
        │                │             │
        ▼                ▼ AREA B      ▼
   ～ 103                            ～ 106
```

| $Pv^* = \tau v^* \times \omega v$ | $\tau e^* = \tau v^*$ <br> $\omega e^* = \omega v^*$ <br> (GEAR-RATIO = 1 ) | $Pv^* = \tau v^* \times \omega v$ |
|---|---|---|

～ 104

CALCULATE $\tau e^*, \omega e^*$ WHICH SATISFY $\tau e^* \times \omega e^* = Pv^*$ AND ON THE BOUNDARY LINE BETWEEN AREAS A AND B (GEAR-RATIO CALCULATION)

～ 107

CALCULATE $\tau e^*, \omega e^*$ WHICH SATISFY $\tau e^* \times \omega e^* = Pv^*$ AND ON THE BOUNDARY LINE BETWEEN AREAS B AND C (GEAR-RATIO CALCULATION)

$\tau m2^* = \tau v^* - \tau e^*$ ～ 108

$\tau m2^*, \omega e$ OUTPUT ～ 109

RETURN

## FIG.4

## FIG.5

# FIG.6A

ENGINE TORQUE $\tau e$

MAXIMUM TORQUE
CURVE

LARGE

EFFICIENCY

ARE B

SMALL

ENGINE SPEED $\omega e$

# FIG.6B

$\tau v1$

P3

$\tau e1$

P1

P2

$\omega v1$   $\omega e1$

VEHICLE SPEED   ENGINE SPEED

# FIG.6C

$\tau e2$
=
$\tau v2$

P1

P2=P3=0

$\omega e2 = \omega v2$

ENGINE SPEED   VEHICLE SPEED

# FIG.6D

$\tau e3$

$\tau v3$

P3

P1

P2

$\omega e3$   $\omega v3$

VEHICLE SPEED   ENGINE SPEED

13

## *FIG.7*

## *FIG.8A*

## *FIG.8B*

# FIG.9

# FIG.10

## FIG.11

# FIG.12A

VEHICLE TORQUE $\tau$ v
ENGINE TORQUE $\tau$ e

AREA A

AREA B

AREA C

ENGINE SPEED $\omega$ e
VEHICLE SPEED $\omega$ v

# FIG.12B

$\tau$ v1

$\tau$ e1

AREA A

AREA B

AREA C

$\omega$ v1    $\omega$ e1

VEHICLE SPEED    ENGINE SPEED

# FIG.12C

AREA A

$\tau$ e3

$\tau$ v3

AREA B

AREA C

$\omega$ e3 = $\omega$ v3

VEHICLE SPEED    ENGINE SPEED

# FIG.12D

AREA A

$\tau$ e3
=
$\tau$ v3

AREA B    AREA C

$\omega$ e3    $\omega$ v3
VEHICLE SPEED    ENGINE SPEED